# Europäisches Patentamt
# European Patent Office
# Office européen des brevets

(11) Numéro de publication: **0 029 271**
**B1**

(12) **FASCICULE DE BREVET EUROPEEN**

(45) Date de publication du fascicule du brevet: **23.01.85**

(21) Numéro de dépôt: **80201070.2**

(22) Date de dépôt: **11.11.80**

(51) Int. Cl.⁴: **D 21 B 1/30, D 21 B 1/32**

(54) **Défibreur.**

(30) Priorité: **19.11.79 BE 198187**

(43) Date de publication de la demande:
**27.05.81 Bulletin 81/21**

(45) Mention de la délivrance du brevet:
**23.01.85 Bulletin 85/04**

(84) Etats contractants désignés:
**AT CH DE FR GB IT LI NL SE**

(56) Documents cités:
**DE-A-2 651 198**
**FR-A- 519 934**
**FR-A- 934 788**
**FR-A-1 554 492**
**FR-A-2 363 665**
**GB-A- 468 407**
**GB-A- 740 384**
**US-A-2 912 174**
**US-A-3 145 162**

(73) Titulaire: **SUNDS DEFIBRATOR AKTIEBOLAG**
**S-851 94 Sundsvall (SE)**

(72) Inventeur: **Hellberg, Enar Valentin**
**rue de l'Aurore, 1a**
**B-1050 Bruxelles (BE)**

(74) Mandataire: **Fobe, Edouard et al**
**Bureau VANDER HAEGHEN 63, Avenue de la**
**Toison d'Or**
**B-1060 Bruxelles (BE)**

Courier Press, Leamington Spa, England.

## Description

La présente invention concerne un défibreur comprenant au moins un tambour cylindrique rotatif muni à sa surface intérieure de déflecteurs longitudinaux, entraîné en rotation et alimenté axialement en matière à défibrer et, intérieurement au tambour cylindrique, un rotor constitué d'un arbre coaxial à ce même tambour cylindrique.

On connait par le document FR—A— 2363665 un défibreur du genre susdit pour désintégrer les matières cellulosiques, les vieux papiers et carbons au moyen d'un rotor, de dimensions relativement grandes, équipé d'une succession de fers plats rectangulaires formant couteaux déchiqueteurs faisant saillie à la périphérie du rotor dans un plan perpendiculaire à l'axe du rotor et d'une succession de dents de désintégration constituées de dièdres inclinés vers le fond de la cuve, entrainés en rotation rapide selon un sens de rotation inverse du sens de rotation du tambour. Outre que ces dents sont soumises, lors du travail de lacération et désintégration, à une intense usure nécessitant de les changer souvent, elles sont incapables de recevoir la matière à défibrer et à la projeter contre la paroi intérieure du tambour, se limitant à former des sillons dans la matière et à provoquer le frottement de la matière sur elle-même.

Dès lors, ce tambour du type connu doit être d'une dimension considérable en diamètre et en longueur pour que la matière subisse un nombre de frottements sur elle-même surffisant au cours de son passage de l'amont à l'aval du tabmour défibreur.

En outre, le couple moteur à appliquer au tambour est grand parce que la matière est entièrement contenue d'un côté du tambour en sorte qu'il se forme un balourd qui fatigue les roulements et provoque leur usure prématurée. Enfin, comme le tambour ne travaille que dans une moitié de sa section, le volume occupé par le tambour est mal utilisé.

La présente invention a pour but de remédier à ces inconvénients.

L'appareil suivant l'invention repose sur l'idée que la matière est défibrée par contact avec une matière dure en mouvement et qu'il y a donc intérêt à multiplier ces contacts. A cette fin, suivant l'invention, le rotor est constitué de pales longitudinales partant radialement de l'arbre, et à extrémités recourbées dans le sens de la rotation, propre à recevoir la matière à défibrer et à la projeter contre la paroi intérieure du tambour.

La matière subit donc deux fois, au cours de chaque tour du tambour, un contact avec une matière dure en mouvement: une fois en rencontrant la surface des pales du rotor, et une seconde fois en étant projetée contre la surface intérieure du tambour.

Dans une forme de réalisation préférée de l'invention, le rotor tourne dans le même sens que le tambour. La vitesse angulaire du tambour est de l'ordre de 15 à 30 tours/minute et la vitesse angulaire du rotor est de l'ordre de 100 à 200 tours/minute.

Suivant une autre particularité avantageuse, les pales du rotor sont légèrement hélicoïdales pour favoriser la progression de la matière, de l'amont à l'aval du rotor.

Dans une disposition préférée, le tambour défibreur dont il vient d'être question est précédé d'un tambour déchiqueteur dans lequel la matière est amenée radialement par une trémie supérieure et tombe à travers des ouvertures créées dans la surface cylindrique du tambour, sur un rotor analogue à celui du tambour défibreur. Cette installation comprenant le déchiqueteur et le défibreur est suivie d'une section d'assortissage connue en soi, laquelle contient avantageusement des palettes montées sur un rotor dont l'axe est concentrique avec l'axe du tambour.

Avantageusement, les tambours de la section de déchiquetage, de la section de défibrage et de la section d'assortissage sont solidaires et entraînés en rotation de l'extérieur, et l'arbre porteur des pales du déchiqueteur, des pales du défibreur et des palettes du rotor de la section d'assortissage est d'une seule pièce, entraînée par un moteur séparé.

Les avantages de l'invention sont les suivants:

1. La matière est distribuée sur presque tout le tambour défibreur et non seulement d'un côté. Le tambour peut donc recevoir par unité de longueur presque le double de la quantité de matière traitée dans les machines connues.

La puissance nécessaire pour l'entraînement du tambour est bien moindre que dans une machineclassique, en raison de cette uniformité de distribution.

2. Comme on l'a observé déjà, la matière rencontrant d'abord les pales du rotor et ensuite la paroi intérieure du tambour est broyée deux fois par tour du tambour.

3. En raison de ce fait, les forces de cisaillement ne népendent plus du diamètre du tambour.

4. Par suite, pour une même capacité, le tambour peut avoir un diamètre un peu supérieur à la moitié du diamètre d'un tambour usuel. La longueur et le temps de rétention peuvent être réduits de près de la moitié.

L'énergie consommée n'excède pas celle que consomme une installation classique.

L'invention sera décrite ci-après sur un exemple de forme de réalisation préféré, représenté aux dessins sur lesquels:

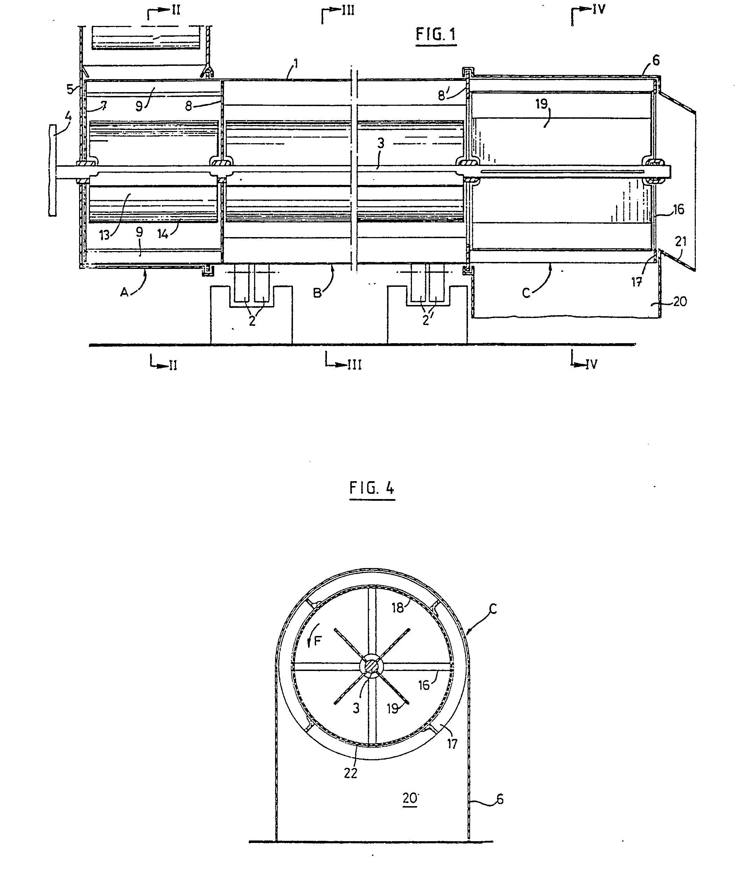

— la figure 1 est une vue en coupe axiale, longitudinale, d'un défibreur complet possédant notamment une section de défibrage suivant l'invention;

— la figure 2 est une coupe transversale de l'appareil suivant la ligne II—II de la figure 1;

— la figure 3 est une coupe transversale de l'appareil suivant la ligne III—III de la figure 1;

— la figure 4 est une coupe transversale de l'appareil suivant la ligne IV—IV de la figure 1;

L'appareil est constitué, dans cette forme de réalisation préférée, d'un tambour 1 comportant trois sections: une section d'alimentation A, une section de défibrage B et une section d'assortissage C. Le tambour est soutenu à son pourtour par des galets 2, 2' dont certains au moins sont moteurs et entraînent le tambour par frottement. Un arbre central unique 3 relié à un moteur 4 traverse les trois sections. La machine est équipée en outre de deux carters extérieurs 5 et 6. Le carter 5 enferme la section de déchiquetage A du tambour 1. Le carter 6 enferme la section d'assortissage C. On décrira à présent les trois sections de la machine, dans l'ordre où elles sont parcourues par la matière à traiter.

Lè section A du tambour 1 comprend un flasque plein 7 que ferme le tambour à l'amont, et un flasque ajouré 8 qui établit une cloison raidisseuse entre la section A et la section B. Ces flasques sont reliés par des profilés 9 présentant une concavité à l'avant (dans le sens de la rotation du tambour, indiqué par la flèche F). Le carter 5 est ouvert à sa partie supérieure et est raccordé à une trémie 10 alimentée par un tapis roulant 11. Il comporte des conduits perforés 12 qui projettent de l'eau dans le tambour, en passant par les jours subsistant entre les profilés 9. Au centre du tambour et calé sur l'arbre 3 se trouve un rotor constitué de pales longitudinales partant radialement (en 13) de l'arbre 3 et recourbées à leurs extrémités (en 14) dans le sens de la rotation F.

La section B du tambour 1, qui est proprement la section de défibrage, est constituée d'une enveloppe extérieure pleine pourvue de déflecteurs longitudinaux de section triangulaire 15 dont la base est contenue dans la surface périphérique du tambour et dont les deux faces sont inclinées sur un plan médian radial. L'inclinaison des faces facilite le décollement de la matière comprise entre deux déflecteurs successifs en empêchant la formation d'un pont. La face qui ne reçoit pas directement la matière joue le rôle de raidisseur pour le déflecteur et l'ensemble du tambour. Les arêtes aiguës formées aux sommets des triangles sont orientées vers l'arbre 3, au centre du tambour. L'arbre 3 porte des pales 13', 14' analogues aux pales 13, 14 de la section A. Ces pales tournent dans le même sens (F) que le tambour, mais à une vitesse égale ou supérieure à dix fois la vitesse angulaire du tambour.

La section C du tambour 1 est séparée de la section B par une cloison raidisseuse ajourée 8', analogue à la cloison 8. La section C comprend le carter extérieur 6 et la partie aval du tambour 1, terminée par une cloison presqu'entièrement ouverte, constituée de barres raidisseuses 16 reliées par un plateau annulaire 17. Dans cette section, le tambour comprend un cylindre 18 perforé sur toute sa surface de trous de 6 à 7 mm de diamètre (comme indiqué en 22), et à l'intérieur, calé sur l'arbre 3, un système de palettes classique (19). La carter 6 qui entoure le tambour, sa monture et le rotor, comporte en dessous une cheminée 20 s'ouvrant dans la direction de départ des fibres, et une goulotte de déversement 21 pour les matières étrangères à éliminer.

Le fonctionnement du dispositif peut s'analyser comme suit:

La matière à traiter, transportée par le tapis roulant 11 tombe entre les barreaux profilés 9 du tambour mobile 1 sur le rotor à pales 13, 14, qui la projette sur les profilés 9, d'où elle retombe dans le bas du tambour, où la présence du carter extérieur 5 l'empêche des d'échapper. Pour ne pas passer vers le haut à travers les vides existant entre les barreaux 9, les dimensions de ces vides et celles des pales 13, 14, et la forme de celles-ci, doivent être judicieusement choisies. Sous l'influence de la forme hélicoïdale des pales 14, et éventuellement de l'inclinaison de l'ensemble de la machine sur l'horizontale si elle a été prévue, la matière déchiquetée par le travail mécanique, aidée de l'aspersion d'eau arrivant par des ajutages alimentés par les conduits 12, passe dans la section B de défibrage proprement dit.

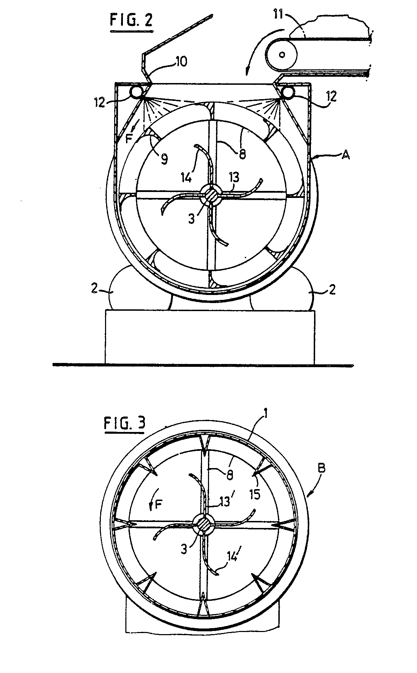

Dans cette section, la matière entre en partie par le centre, entre les pales 13' et 14' du rotor central qui prolonge le rotor du déchiqueteur. Cette partie de la matière qui a déjà subi un choc à sa rencontre avec ce rotor subit encore en écrasement entre les pales 13' et est bientôt projetée, par les parties recourbées 14' des pales, vers les déflecteurs 15 dans la moitié de la machine située à gauche sur la figure 3. Les arêtes aiguës des déflecteurs 15 contribuent à l'action de défibrage. Une autre fraction de la matière, arrivant le long des déflecteurs 15 dans la partie inférieure du tambour 1, est relevée par les déflecteurs d'où elle glisse vers le bas peu avant d'arriver au sommet du tambour. Elle tombe alors sur les pales 13', 14' qui la projettent également comme dit plus haut. La totalité de la matière qui est finalement retombée plusieurs fois (dans la partie de gauche de la machine) dans le bas du rotor quitte finalement celui-ci axialement, à travers la cloison 8', pour arriver dans la section C dite d'assortissage dont la contruction générale et la fonctionnement sont connus en soi. Elle y subit une dilution par un apport d'eau (assuré par des ajutages non représentés, situés à la partie supérieure du carter 6) et, pressée par les palettes radiales 19 du rotor central, elle traverse les perforations 22 et s'échappe dans la cheminée 20. Les matières étrangères (fils, métal, matières plastiques) sont évacuées par la goulotte 21.

Pour donner une idée de la supériorité de la machine suivant l'invention sur les machines connues, on donnera ci-après une comparaison du défibreur proprement dit (section B) de l'invention avec deux défibreurs connus. Toutes les comparaisons sont faites sur la base du débit par 24 heures.

Les calculs sont effectués à l'aide des formules suivantes:

Poids de matière sèche dans le tambour =

$$P = \left(\frac{\pi D_1^2}{4}\right) - \left(\frac{\pi D_2^2}{4}\right) \times F \times L \times C, \text{ (en Kgs)}$$

Production de pulse sèche en 24 heures =

$$Q = \frac{P \times 24 \times 60}{R \times C \times 1\,000}, \text{ (en tonnes)}$$

où $D_1$ = diamètre mesuré aux bords intérieurs des déflecteurs:
$D_2$ = diamètre du tambour;
$F$ = degré de remplissage entre les déflecteurs;
$L$ = longueur de la zone de défibrage;
$C$ = consistance de la matière sèche en %
$R$ = temps de séjour dans le tambour.

A1. Machine connue à tembour de 2,25 m de diamètre, de longueur L = 5,8 m, F = 4/8
P = 799 Kg
Q = 63,9 tonnes/24 heures

A2. Machine suivant l'invention à tambour de diamètre de 2,25 m, de longueur L = 4 m,
F = 7/8
P = 964 Kg
Q = 155 tonnes/24 heures.

B1. Machine connue à tambour de 3,00 m de diamètre, de longueur L = 11 m, F = 4/8
P = 3.238 Kg
Q = 259 tonnes/24 heures.

B2. Machine suivant l'invention à tambour de 3,00 m de diamètre, de longueur L = 6 m, F = 7/8
P = 3.090 Kg
Q = 495 tonnes/24 heures.

On donnera encore ci-après les caractéristiques d'une machine suivant l'invention de petites dimensions: (diamètre 1,5 m, L = 4 m, degré de templissage F = 7/8)
P = 428 Kg
Q = 68,5 tonnes/24 heures.

Cette dernière machine est à comparer à la première (A1).

**Revendications**

1. Défibreur comprenant au moins un tambour (1) cylindrique rotatif muni à sa surface intérieure de déflecteurs longitudinaux (15), entraîné en rotation et alimenté axialement en matière à défibrer et, intérieurement au tambour cylindrique, un rotor constitué d'un arbre (3) coaxial à ce même tambour cylindrique, caractérisé en ce que le rotor est constitué de pales longitudinales (13', 14') partant radialement de l'arbre (3), et à extrémités recourbées dans le sens de la rotation, propre à recevoir la matière à défibrer et à la projeter contre la paroi intérieure du tambour.

2. Défibreur suivant la revendication 1, caractérisé en ce que les déflécteurs longitudinaux (15) ont une section transversale de forme triangulaire, présentant ainsi vers l'axe une arête aiguë.

3. Défibreur suivant la revendication 2, caractérisé en ce que les faces latérales des triangles sont inclinées par rapport à un plan médian radial.

4. Défibreur suivant l'une quelconque des revendications précédentes, caractérisé en ce que le rotor intérieur tourne dans le même sens que le tambour (1).

5. Défibreur suivant l'une quelconque des revendications précédentes, caractérisé en ce que la vitesse angulaire de rotation du rotor (13', 14') est supérieure á la vitesse de rotation du tambour (1).

6. Défibreur suivant l'une quelconque des revendications précédentes, caractérisé en ce que la vitesse de rotation du tambour (1) est de l'ordre de 15 à 30 tours/minute et en ce que la vitesse de rotation du rotor (13', 14') est de l'ordre de 100 à 200 tours/minute.

7. Défibreur suivant l'une quelconque des revendications précédentes, caractérisé en ce que les pales (13', 14') du rotor sont au nombre de quatre.

8. Défibreur suivant l'une quelconque des revendications précédentes, caractérisé en ce que le temps de rétention de la matière dans le défibreur est de 10 à 20 minutes.

9. Défibreur suivant l'une quelconque des revendications précédentes, caractérisé en ce que l'axe du tambour (1) et du rotor intérieur est incliné sur l'horizontale.

10. Défibreur suivant l'une quelconque des revendications précédentes, caractérisé en ce que les pales (13', 14') du rotor ont une forme légèrement en spirale dans la direction longitudinale, en sorte que la matière projetée à chaque tour progresse lentement vers l'extrémité aval du tambour.

11. Défibreur suivant l'une quelconque des revendications précédentes, caractérisé en ce qu'il comprend, un tête d'une section de défibrage (B) conçue suivant une ou plusieurs des revendications 1 à 10, une section de déchiquetage (A) comprenant un tambour rotatif dont la paroi latérale (8) est ajourée pour livrer passage à la matière déversée par une trémie supérieure (10), et un rotor constitué d'un arbre central (3) et de pales recourbées (13, 14) analogue à celui de la section de défibrage (B).

12. Défibreur suivant la revendication 11, caractérisé en ce que l'arbre (3) du rotor de la section de déchiquetage (A) est un prolongement, vers l'amont, de l'arbre (3) du rotor de la section de défibrage (B).

13. Défibreur suivant l'une quelconque des revendications 11 et 12, caractérisé en ce que le tambour de la section de déchiquetage (A) est constitué par un prolongement, vers l'amont, du tambour de la section de défibrage (B).

14. Défibreur suivant la revendication 11, caractérisé en ce qu'il comprend à la suite de la section de défibrage (B) une section d'assortissage (C) connue en soi, constituée d'un tambour perforé (18) et d'un rotor coaxial à celui-ci, comportant un arbre (3) et des palettes radiales (19).

15. Défibreur suivant la revendication 14, caractérisé en ce que l'arbre (3) des rotors des deux ou trois sections qui le constituent leur est commun.

16. Défibreur suivant l'une quelconque des revendications 14 et 15, caractérisé en ce que le tambour de la section de déchiquetage (A), le tambour de la section de défibrage (B) et le tambour de la section d'assortissage (C) sont constitués d'un corps commun.

## Patentansprüche

1. Stofflöser mit zumindest einer rotierenden zylindrischen Trommel (1), die an ihrer Innenfläche mit länglichen Leitblechen (15) versehen, rotationsbetrieben und axial mit dem aufzulösenden Material gespeist ist, und einem durch eine zu dieser zylindrischen Trommel koaxialen Welle (3) gebildeten Rotor im Inneren der zylindrischen Trommel, dadurch gekennzeichnet, daß der Rotor durch radial von der Welle (3) abstehende Längsschaufeln (13', 14') gebildet und mit den in Rotationsrichtung gebogenen Enden fähig ist, das aufzulösende Material aufzunehmen und gegen die Innenwand der Trommel zu schleudern.

2. Stofflöser nach Anspruch 1, dadurch gekennzeichnet, daß die länglichen Leitbleche (15) dreieckige Querschnittsform haben und so zur Achse einen spitzen Abschluß aufweisen.

3. Stofflöser nach Anspruch 2, dadurch gekennzeichnet, daß die Seitenflächen der Dreiecke in bezug auf eine radiale Mittelebene geneigt sind.

4. Stofflöser nach einem der vorhergehenden Ansprüche, dadurch gekennzeichnet, daß sich der Innenrotor in dieselbe Richtung wie die Trommel (1) dreht.

5. Stofflöser nach einem der vorhergehenden Ansprüche, dadurch gekennzeichnet, daß die Winkelgeschwindigkeit der Rotation des Rotors (13', 14') höher als die Rotationsgeschwindigkeit der Trommel (1) ist.

6. Stofflöser nach einem der vorhergehenden Ansprüche, dadurch gekennzeichnet, daß die Rotationsgeschwindigkeit der Trommel (1) in der Größenordnung von 15 bis 30 U/min liegt und daß die Rotationsgeschwindigkeit des Rotors (13', 14') in der Größenordnung von 100 bis 200 U/min liegt.

7. Stofflöser nach einem der vorhergehenden Ansprüche, dadurch gekennzeichnet, daß der Rotor vier Schaufeln (13', 14') aufweist.

8. Stofflöser nach einem der vorhergehenden Ansprüche, dadurch gekennzeichnet, daß die Verweilzeit des Materials im Zerkleinerer 10 bis 20 min beträgt.

9. Stofflöser nach einem der vorhergehenden Ansprüche, dadurch gekennzeichnet, daß die Achse der Trommel (1) und des Innenrotors zur Horizontalen geneigt ist.

10. Stofflöser nach einem der vorhergehenden Ansprüche, dadurch gekennzeichnet, daß die Schaufeln (13', 14') des Rotors in Längsrichtung leichte Spiralenform aufweisen, sodaß das bei jeder Umdrehung geschleuderte Material langsam zum stromabwärtigen Ende der Trommel gelangt.

11. Stofflöser nach einem der vorhergehenden Ansprüche, dadurch gekennzeichnet, daß er am Kopf eines nach einem oder mehreren der Ansprüche 1 bis 10 konzipierten Stoffauflösungsabschnitts (B) einen Shredderabschnitt (A) mit einer rotierenden Trommel, deren Seitenwand (8) zum Durchlassen des durch einen oberen Trichter (10) abgeworfenen Materials durchlöchert ist, und einen durch eine zentrale Welle (3) und gebogene Schaufeln (13, 14) gebildeten Rotor, analog zu jenem des Stoffauflösungsabschnitts (B), umfaßt,

12. Stofflöser nach Anspruch 11, dadurch gekennzeichnet, daß die Welle (3) des Rotors des Shredderabschnitts (A) stromaufwärts eine Verlängerung der Welle (3) des Rotors des Stoffauflösungsabschnitts (B) ist.

13. Stofflöser nach einem der Ansprüche 11 und 12, dadurch gekennzeichnet, daß die Trommel des Shredderabschnitts (A) stromaufwärts durch eine Verlängerung der Trommel des Stoffauflösungsabschnitts (B) gebildet ist.

14. Stofflöser nach Anspruch 11, dadurch gekennzeichnet, daß er nach dem Stoffauflösungsabschnitts (B) einen an sich bekannten Sichterabschnitt (C) umfaßt, der durch eine perforierte Trommel (18) und einen zu dieser koaxialen Rotor mit einer Welle (3) und radialen Schaufeln (19) gebildet ist.

15. Stofflöser nach Anspruch 14, dadurch gekennzeichnet, daß die Rotoren der beiden oder drei sie bildenden Abschnitte eine gemeinsame Welle (3) aufweisen.

16. Stofflöser nach einem der Ansprüche 14 und 15, dadurch gekennzeichnet, daß die Trommel des Shredderabschnitts (A), die Trommel des Stoffauflosungsabschnitts (B) und die Trommel des Sichterabschnitts (C) aus einem gemeinsamen Körper gebildet sind.

## Claims

1. Pulper comprising at least one rotary cylindrical drum (1) provided on its inner surface with longitudinal deflectors (15), driven in rotation and axially supplied with material which is to be defibrated and, inside the cylindrical drum, a rotor consisting of a shaft (3) coaxial with same cylindrical drum characterized in that the rotor is constituted of longitudinal blades (13', 14') branching off radially from the shaft (3), and having ends curved in the direction of rotation, which is capable of receiving the material to be defibrated and of projecting it on the inner wall of the drum.

2. Pulper according to claim 1, characterized in that the longitudinal deflectors (15) have a triangular cross section, thus having a sharp ridge towards the axis.

3. Pulper according to claim 2, characterized in that the sides of the triangles are inclined relative to a radial median plane.

4. Pulper according to any of the preceding claims, characterized in that the inner rotor rotates in the same direction as the drum (1).

5. Pulper according to any of the preceding claims, characterized in that the angular speed of rotation of the rotor (13', 14') is greater than the speed of rotation of the drum (1).

6. Pulper according to any of the preceding claims, characterized in that the speed of rotation of the drum (1) is of the order of 15 to 30 r.p.m. and in that the speed of rotation of the rotor (13', 14') is of the order of 100 to 200 r.p.m.

7. Pulper according to any of the preceding claims, characterized in that there are four blades (13', 14') on the rotor.

8. Pulper according to any of the preceding claims, characterized in that the retention time of the material in the pulper is 10 to 20 minutes.

9. Pulper according to any of the preceding claims, characterized in that the axis of the drum (1) and the inner rotor is inclined relative to the horizontal.

10. Pulper according to any of the preceding claims, characterized in that the blades (13', 14') of the rotor are slightly spiral in shape in the longitudinal direction, so that the material projected on each revolution travels slowly towards the downstream end of the drum.

11. Pulper according to any of the preceding claims, characterized in that it comprises, at the top of a defibrating section (B) designed according to one or more of claims 1 to 10, a shredder section (A) comprising a rotary drum the side wall (8) of which is perforated so as to allow the material delivered from an upper hopper (10) to pass through, and a rotor consisting of a central shaft (3) and curved blades (13, 14), analogous to that in the defibrating section (B).

12. Pulper according to claim 11, characterized in that the shaft (3) of the rotor of the shredder section (A) is an extension, in the upstream direction, of the shaft (3) of the rotor of the defibrating section (B).

13. Pulper according to any of claims 11 and 12, characterized in that the drum of the shredder section (A) is an extension, in the upstream direction, of the drum of the defibrating section (B).

14. Pulper according to claim 11, characterized in that, following the defibrating section (B), it comprises a sorting section (C) which is known *per se*, consisting of a perforated drum (18) and a rotor coaxial therewith, comprising a shaft (3) and radial blades (19).

15. Pulper according to claim 14, characterized in that the shaft (3) of the rotors of the two or three sections constituting it is common to them.

16. Pulper according to any of claims 14 and 15, characterized in that the drum of the shredder section (A), the drum of the defibrating section (B) and the drum of the sorting section (C) all consist of a common part.

FIG. 1

FIG. 4

1

FIG. 2

FIG. 3